# EUROPÄISCHE PATENTSCHRIFT

(11) **EP 1 456 460 B1**
(45) Veröffentlichungstag und Bekanntmachung des Hinweises auf die Patenterteilung: **04.06.2008**
(21) Anmeldenummer: 02787875.0
(22) Anmeldetag: 29.11.2002
(51) Int. Cl.: D06N 1/00, C08K 3/22

(54) **BODENBELAG AUF LINOLEUMBASIS MIT VERBESSERTEM BRANDVERHALTEN**
LINOLEUM FLOOR COVERING HAVING IMPROVED FIRE RESISTANCE
REVETEMENT DE SOL A BASE DE LINOLEUM AYANT DES PROPRIETES IGNIFUGES AMELIOREES

(30) Priorität: 19.12.2001 DE 10162528
(43) Veröffentlichungstag der Anmeldung: 15.09.2004
(73) Patentinhaber: Armstrong DLW AG, 74321 Bietigheim-Bissingen (DE)
(72) Erfinder: BURMEISTER, Guido, 74348 Lauffen am Neckar (DE); MAUK, Hanns-Jörg, 74395 Mundelsheim (DE); ESS, Milko, 71691 Freiberg am Neckar (DE)
(74) Vertreter: Müller-Boré & Partner Patentanwälte
(86) Internationale Anmeldenummer: PCT/EP2002/013521
(87) Internationale Veröffentlichungsnummer: WO 2003/052196

(56) Entgegenhaltungen:
- WO-A-02/081812
- DE-A- 10 130 217
- GB-A- 761 672
- US-A- 2 412 303
- DATABASE WPI Section Ch, Week 197726 Derwent Publications Ltd., London, GB; Class A60, AN 1977-46533Y XP002236566 & SU 514 819 A (KARLIK V M), 9. September 1976 (1976-09-09)

## Beschreibung

Die vorliegende Erfindung betrifft einen Bodenbelag auf Linoleum-Basis mit verbesserten Flammschutzeigenschaften, umfassend mindestens eine Nutzschicht aus Linoleum, welche mindestens eine Phosphor-enthaltende Verbindung, Lösung, Suspension oder Dispersion als flüssiges/viskoses Flammschutzmittel in einer Menge von bis zu 20 Gew.-%, bezogen auf die Menge der Nutzschicht, enthält, wobei die Nutzschicht weiter Wasserglas in einer Menge von bis zu 15 Gew.-%, bezogen auf die Menge der Nutzschicht, enthält, sowie ein Verfahren zur Herstellung davon.

Bodenbeläge auf Linoleum-Basis sowie Verfahren zu deren Herstellung sind seit langem bekannt. Ein Nachteil der im Stand der Technik bekannten Bodenbeläge auf Linoleum-Basis ist jedoch das nicht unkritische Brandverhalten. Linoleum erreicht nur mit Schwierigkeiten die Baustoffklasse B1 (Brandprüfung nach DIN 4102 T14, "Radiant Flooring panel Test"). In Zukunft : sollen die Anforderungen an Bodenbeläge durch eine neue EN-Norm verschärft werden. Beispielsweise muß derzeit ein Linoleum-Fußbodenbelag eine sogenannte kritische Strahlungsintensität von ≥ 4,5 kW/m² nach DIN 4102 T14 erreichen, um in die ökonomisch wichtige Baustoffklasse B1 eingeordnet zu werden. Bei einer zukünftigen Einführung der neuen Testmethode nach EN ISO 9239-1 und EN ISO 11925-2, die sich zwar an die alte Prüfung DIN 4102 T14 anlehnt, deren Klassifizierung aber nach prEN 13501-1 erfolgt, werden Bodenbeläge insbesonder Linoleum mit einem Testergebnis von ≥ 4,5 kW/m² nicht mehr in B1, sondern in C_{FL} eingestuft. Daraus können gegenüber anderen Kunststoffbodenbelägen beispielsweise PVC erhebliche Wettbewerbsnachteile entstehen. Erst bei einer kritischen Strahlungsintensität von ≥ 8 kW/m² wäre die Einstufung in die wirtschaftlich wichtige Baustoffklasse B_{FL} möglich. Das nicht unkritische Brandverhalten ist auch ein Nachteil der im Stand der Technik bekannten Bodenbeläge auf Kork-Basis.

WO-A-02/081812 beschreibt einen Bodenbelag auf Linoleum-Basis mit verbesserten Flammschutzeigenschaften sowie ein Verfahren für dessen Herstellung. GB-A-761,672 beschreibt Bodenbeläge auf Linoleum-Basis, die als Flammschutzmittel Tricresylphosphat enthalten.

Somit liegt der vorliegenden Erfindung die Aufgabe zugrunde, einen Bodenbelag auf Linoleum-Basis oder Kork-Basis, der ein deutlich verbessertes Brandverhalten im Vergleich zu im Stand der Technik bekannten Linoleum- oder Kork-Bodenbelägen aufweisen soll, bereitzustellen.

Diese Aufgabe wird durch die in den Ansprüchen gekennzeichneten Gegenstände gelöst.

Insbesondere wird ein Bodenbelag auf Linoleum-Basis bereitgestellt, umfassend mindestens eine Nutzschicht aus Linoleum, welche mindestens eine Phosphor-enthaltende Verbindung, Lösung, Suspension oder Dispersion als flüssiges/viskoses Flammschutzmittel in einer Menge von bis zu 20 Gew.-%, vorzugsweise bis zu 10 Gew.-%, bezogen auf die Menge der Nutzschicht, enthält, wobei die Nutzschicht weiter Wasserglas in einer Menge von bis zu 15 Gew.-%, bezogen auf die Menge der Nutzschicht, enthält.

Das flüssige/viskose Flammschutzmittel ist vorzugsweise aus der Gruppe Phosphat, Phosphit, Phosphonat, organisch substituiertes Phosphonat und Gemischen davon ausgewählt. Beispiele für organisch substituierte Phosphonate sind cyclische oder acyclische Ester organischer Phosphonsäuren, wie Diester, z.B. Dimethylpropanphosphonat. Gemäß einer weiteren bevorzugten Ausführungsform der vorliegenden Erfindung kann als flüssiges/viskoses Flammschutzmittel eine wässrige/ölige, roten Phosphor-enthaltende Dispersion verwendet werden. Dabei kann es sich um stabilisierten und mikroverkapselten roten Phosphor handeln, wobei als Carrier bzw. Träger Wasser oder Rizinusöl verwendet werden kann. Der Phosphorgehalt liegt vorzugsweise zwischen 40 und 60 Gew.-%, bezogen auf die Gesamtdispersion. Selbstverständlich kann auch ein Gemisch aus rotem Phosphor und mindestens einem der vorstehend genannten flüssigen/viskosen Flammschutzmittel eingesetzt werden.

Unter einem flüssigen/viskose Flammschutzmittel wird erfindungsgemäß ein Flammschutzmittel mit einer dynamischen Viskosität von bis 40000 Pa·s (100°C) verstanden, vorzugsweise bis 5000 Pa·s (100°C), besonders bevorzugt bis 200 Pa·s (100°C).

Die in der Nutzschicht aus Linoleum zusätzlich verwendbaren Flammschutzmittel unterliegen keiner besonderen Beschränkung und es können beispielsweise die im Stand der Technik bekannten Flammschutzmittel aus der Gruppe der verkohlungsfördernden und feuererstickenden Flammschutzmittel, wie Ammoniumphosphat oder Dipentaerythrit, der sperrschichtbildenden Flammschutzmittel, wie Borate und Ammoniumpolyphosphate, der festen anorganischen Flammschutzmittel und der dämmschichtbildenden Flammschutzmittel bzw. Intumeszenzmittel eingesetzt werden. Als zusätzliche Flammschutzmittel können ferner halogenierte organische Verbindungen, wie Chlorparaffine, oder halogenierte organische Phosphorverbindungen verwendet werden. Unter festen anorganischen Flammschutzmitteln werden beispielsweise anorganische Verbindungen, wie Aluminiumoxidhydrate, Borate, z.B. Zinkborate, Ammoniumphosphate, Antimonoxide, Aluminiumhydroxide, vorzugsweise Aluminiumtrihydroxid, und Magnesiumhydroxid verstanden, wobei Aluminiumhydroxid und Magnesiumhydroxid auch als wasserabspaltende Flammschutzmittel bezeichnet werden. Der Anteil der festen anorganischen Flammschutzmittel beträgt vorzugsweise bis zu 60 Gew.-%, besonders bevorzugt bis zu 30 Gew.-%, bezogen auf die Menge der Nutzschicht. Besonders bevorzugt ist das feste anorganische Flammschutzmittel Aluminiumtrihydroxid. Diese Flammschutzmittel können einzeln oder als mindestens zwei dieser Flammschutzmittel (aus der gleichen oder unterschiedlichen, vorstehend aufgeführten Gruppen) enthaltendes Gemisch in der Linoleum-Nutzschicht vorliegen.

Durch zusätzliches Einarbeiten von Wasserglas lassen sich ferner die Verarbeitungseigenschaften deutlich verbessern (d.h. in der Mischmasse bildet sich ein "inneres Gerüst" aus und verstrammt somit die Mischmasse) und die Reifezeit kann beträchtlich verkürzt werden. Das verwendbare Wasserglas, welches ein sperrschichtbildendes Flammschutzmittel ist, ist beispielsweise Natronwasserglas. Es kann auch ein Gemisch von mindestens zwei unterschiedlichen sperrschichtbildenden Flammschutzmitteln, d.h. Wasserglas in Kombination mit einem oder mehreren z.B. vorstehend beschriebenen sperrschichtbildenden Flammschutzmitteln in der Linoleum-Nutzschicht verwendet werden. Wasserglas ist in der Nutzschicht aus Linoleum in einer Menge von bis zu 15 Gew.-%, bezogen auf die Menge der Nutzschicht, vorhanden.

Im Gegensatz zur herkömmlichen Auffassung, daß hochalkalische Substanzen zerstörend auf die Struktur des Linoleums wirken, kann beim zusätzlichen Einsatz von Wasserglas in Anteilen bis zu 15% überraschenderweise festgestellt werden, daß der pH-Wert über die im Linoleumzement natürlich enthaltenen Säuren und die bei der Zement-Kochung und der Reifung entstehenden Säuren reguliert wird.

Ferner kann bei Verwendung von beispielsweise Natronwasserglas festgestellt werden, daß dieses Wasserglas grundsätzlich langkettig polykondensiert und dadurch ein "inneres Gerüst" in der Linoleummasse gebildet wird, was im Zusammenhang mit der oxidativen Reifung des Linoleums zu einem schneller härtenden Material mit verbesserten Eigenschaften hinsichtlich beispielsweise Brandverhalten, Härtegrad, Flexibilität, Abrieb, etc., führt. Darüber hinaus können bei Verwendung von Wasserglas in Verbindung mit den erfindungsgemäßen flüssigen/viskosen Flammschutzmitteln die verstrammenden Eigenschaften von Wasserglas durch einen Verseifungsprozeß des flüssigen/viskosen Flammschutzmittels annähernd aufgehoben werden, wobei die freiwerdenden Salze als pH-Puffer wirken und die Linoleummasse im wesentlichen pH-neutral gehalten werden kann.

Des weiteren umfaßt die Nutzschicht aus Linoleum übliche Komponenten, wie Bindemittel (sog. Bedford-Zement oder B-Zement aus einem teiloxidierten Leinöl und mindestens einem Harz als Klebrigmacher), mindestens einen Füllstoff und ggf. mindestens ein Färbemittel. Als Füllstoff werden üblicherweise Weichholzmehl und/oder Korkmehl (bei gleichzeitiger Anwesenheit von Holzmehl und Korkmehl typischerweise im Gewichtsverhältnis 90:10) und/oder Kreide, Kaolin (China-Clay), Kieselgur und Schwerspat verwendet. Zusätzlich kann zur Verstrammung der Masse als Füllstoff gefällte Kieselsäure und geringe Mengen Wasserglas, beispielsweise Wasserglas in einer Menge von bis zu 15 Gew.-%, bezogen auf die Menge der Nutzschicht, zugegeben werden.

Die Linoleum-Mischmasse enthält üblicherweise mindestens ein Färbemittel, wie ein Pigment (z.B. Titandioxid), und/oder andere übliche Färbemittel auf Basis von anorganischen und organischen Farbstoffen. Als Färbemittel können jegliche natürliche oder synthetische Farbstoffe sowie anorganische oder organische Pigmente, allein oder in beliebiger Kombination, verwendet werden.

Eine typische Linoleum-Zusammensetzung enthält, bezogen auf das Gewicht der Nutzschicht, 40 Gew.-% Bindemittel, 30 Gew.-% organische Stoffe, 20 Gew.-% anorganische (mineralische) Füllstoffe und 10 Gew.-% Färbemittel. Ferner können in der Linoleum-Mischmasse übliche Additive, wie Verarbeitungshilfsmittel, Antioxidantien, UV-Stabilisatoren, Gleitmittel und dergleichen enthalten sein, die in Abhängigkeit des Bindemittels ausgewählt werden.

Darüber hinaus kann der erfindungsgemäße Bodenbelag auf Linoleum-Basis auch elektrisch leitfähig durch Zusatz mindestens eines Derivats des Imidazols, Imidazolins, Benzimidazols oder Morpholins oder einer kationenaktiven Verbindung (vgl. DE 34 16 573 und WO 99/10592) und/oder durch Anordnen einer Schicht auf Linoleum-Basis, welche mindestens einen elektrisch leitfähigen Füllstoff, beispielsweise Ruß oder Metallpulver, enthält, unter die Linoleum-Nutzschicht ausgebildet sein. Selbstverständlich kann auch eine derartige elektrisch leitfähige Schicht weiter ein oder mehrere der vorgenannten Flammmschutzmittel enthalten.

Die Linoleum-Nutz- bzw. Oberschicht weist vorzugsweise eine Dicke von 0,9 bis 6,0 mm, besonders bevorzugt 1,4 bis 4 mm, auf. Unter Nutzschicht wird im Rahmen der vorliegenden Erfindung die aus einem homogenen Material aufgebaute, oberste Schicht des Bodenbelags verstanden.

Der erfindungsgemäße Bodenbelag auf Linoleum-Basis kann trägerlos (vgl. DE 199 10 389 A1) sein oder einen Träger umfassen. Als Trägermaterial kann ein Material auf Basis natürlicher oder synthetischer Gewebe oder Gewirke sowie Textilwerkstoffe eingesetzt werden. Als Beispiele können Jutegewebe, Mischgewebe aus natürlichen Fasern, wie Baumwolle und Zellwolle, Glasfasergewebe, mit Haftmittel beschichtetes Glasfasergewebe, Mischgewebe aus Synthesefaser, Gewebe aus Kern/Mantelfasern mit z.B. einem Kern aus Polyester und einer Ummantelung aus Polyamid, genannt werden. Als Haftvermittler für Glasfasergewebe kann beispielsweise eine Beschichtung der Glasfasern aus einem Styrol-Eutadien-Latex verwendet werden.

Der erfindungsgemäße Bodenbelag kann mit oder ohne Träger ausgebildet sein, wobei die Linoleum-Nutzschicht sowohl einschichtig als auch mehrschichtig gestaltet sein kann. Dabei ergeben sich je nach Schichtfolge sowohl symmetrische als auch asymmetrische Flächengebilde, wobei bei trägerlosen Linoleum-Flächengebilden symmetrische Aufbauten bevorzugt sind. Beispielsweise kann der erfindungsgemäße Bodenbelag zwei Schichten aus Linoleum umfassen (materialhomogen), die gleich oder verschieden sein können.

Weiterhin kann unter der Linoleum-Nutzschicht eine Korkmentschicht mit oder ohne Träger angeordnet sein. Korkment ist eine Mischung, die B-Zement und gemahlenen Kork als Füllstoff enthält und bei Bodenbelägen als isolierende Unterschicht für eine bessere Wärmeisolierung, Trittelastizität und Gehkomfort sorgt und den Tritt- und Raumschall dämpft. Auch eine derartige Korkmentschicht kann weiter ein oder mehrere der vorgenannten Flammschutzmittel umfassen.

Daneben können auch unter oder zwischen zwei Linoleumschichten funktionale Schichten angeordnet sein, so daß sich drei- oder mehrschichtige Flächengebilde ergeben. Beispielsweise kann unter der Nutzschicht des erfindungsgemäßen Bodenbelags mindestens eine weitere Schicht, vorzugsweise eine Schaumschicht, eine Schicht zur Trittschalldämmung und/oder eine Isolationsschicht angeordnet sein. Die Schichtdicken der aufgebrachten Schichten können gleich oder verschieden sein. Alle diese unter oder zwischen zwei Linoleumschichten angeordneten funktionale Schichten können ebenfalls jeweils weiter ein oder mehrere der vorgenannten Flammschutzmittel enthalten.

Ferner kann auf der Rückseite des erfindungsgemäßen Bodenbelags ohne Träger mindestens eine Klebeschicht angeordnet sein.

Der erfindungsgemäße Bodenbelag auf Linoleum-Basis kann in Form von Bahnen oder Fliesen vorliegen.

Beispielsweise kann der erfindungsgemäße Bodenbelag auf Linoleum-Basis durch übliche Verfahren zur Herstellung ein- oder mehrschichtiger Linoleum-Bodenbeläge mit oder ohne Träger hergestellt werden. Vorzugsweise wird bei der Verarbeitung von Linoleumzementen, die gemäß den Anforderungen von DIN EN 548 aus trocknenden Pflanzenölen bzw. -fetten und Baumharzen hergestellt werden, bereits auf der Stufe des Öloxidationsprozesses Phosphate, Phosphite, Phosphonate, organisch substituierte Phosphonate oder Gemische davon zugegeben, um eine Reaktion der vorstehend genannten Phosphorverbindungen z.B. mit freien Doppelbindungen oder eine Veresterung mit vorhandenen OH-Gruppen zu bewirken oder zumindest eine innige Anbindung (Vermischung) an den Linoleum-Zement zu erreichen.

Ferner stellt die vorliegende Erfindung ein übliches Verfahren zur Herstellung eines Bodenbelags auf Linoleum-Basis bereit, umfassend mindestens eine Nutzschicht aus Linoleum, welche mindestens eine Phosphor-enthaltende Verbindung, Lösung, Suspension oder Dispersion als flüssiges/viskoses Flammschutzmittel in einer Menge von bis zu 20 Gew.-%, bezogen auf die Menge der Nutzschicht, und ferner Wasserglas in einer Menge von bis zu 15 Gew.-%, bezogen auf die Menge der Nutzschicht, enthält, worin die mindestens eine flüssige/viskose Flammschutzmittel-enthaltende Linoleum-Mischmasse mittels Kalandern oder Walzwerken zu einem Bodenbelag mit oder ohne Juteträger verarbeitet wird. Gemäß einer bevorzugten Ausführungsform des erfindungsgemäßen Herstellungsverfahrens kann, wie vorstehend definiert, als flüssiges/viskoses Flammschutzmittel mindestens eines aus der Gruppe Phosphat, Phosphit, Phosphonat, organisch substituiertes Phosphonat und Gemischen davon ausgewählt werden. Nach einer weiteren bevorzugten Ausführungsform kann, wie vorstehend definiert, auch eine wässrige/ölige, roten Phosphor-enthaltende Dispersion oder ein Gemisch aus rotem Phosphor und mindestens einem der vorstehend genannten flüssigen/viskosen Flammschutzmittel eingesetzt werden.

Die vorliegende Erfindung sowie weitere sich daraus ergebende Vorteile werden in der nachfolgenden Beschreibung unter Bezugnahme auf die in den Beispielen beschriebenen Ausführungsformen näher erläutert.

### Beispiele

### Linoleum-Bodenbelag

Zunächst werden alle in der nachstehenden Tabelle 1 aufgelisteten Komponenten für die Linoleum-Masse in einem geeigneten Mischaggregat zu einer möglichst homogenen Grundmasse (Mischmasse) vermischt. Die so erhaltene Mischmasse wird durch ein Walzwerk zu Fellen verarbeitet und einem Kratzer bzw. Granulator zugeführt, wonach die dadurch erhaltenen Mischmassepartikel einem Kalander zugeführt werden und unter Druck und einer Temperatur von üblicherweise 10°C bis 150°C auf Jute als Trägermaterial gepreßt werden.

In Tabelle 1 ist beispielhaft eine erfindungsgemäße Rezeptur aufgelistet, wobei sich die angegebenen Werte auf Gew.-%, bezogen auf die Menge der Gesamtmischung (Nutzschicht), beziehen. Die in Tabelle 1 angegebenen einzelnen Bestandteile der Rezeptur sind so auszuwählen, daß sich für jede spezifische Rezeptur für die Nutzschicht der Wert 100 Gew.-% ergibt.

**Tabelle 1**

| **Rezeptur** | **(Gew.-%)** |
|---|---|
| Zement | 30-55 |
| Korkmehl | 0-25 |
| Holzmehl | 5-45 |
| Kreide | 0-60 |
| Titandioxid | 1-15 |
| Buntpigmente | 0-5 |
| Kieselgur | 0-8 |
| Zinkoxid | 0-5 |
| Aluminiumtrihydroxid | 0-60 |
| flüssiges/viskoses Flammschutzmittel | 0,01-20 |

Die in Tabelle 1 aufgeführte Rezeptur bzw. der daraus hergestellte Linoleum-Bodenbelag zeigt aufgrund der erfindungsgemäß verwendeten flüssig/viskosen und gegebenenfalls weiteren Flammschutzmittel drastisch verbesserte Flammschutzeigenschaften im Vergleich zu einem herkömmlichen Linoleum-Bodenbelag ohne Flammschutzmittel bei ansonsten im wesentlichen gleichbleibenden Eigenschaften.

## Patentansprüche

1. Bodenbelag auf Linoleum-Basis, umfassend mindestens eine Nutzschicht aus Linoleum, welche mindestens eine Phosphor-enthaltende Verbindung, Lösung, Suspension oder Dispersion als flüssiges/viskoses Flammschutzmittel in einer Menge von bis zu 20 Gew.-%, bezogen auf die Menge der Nutzschicht, enthält, wobei die Nutzschicht weiter Wasserglas in einer Menge von bis zu 15 Gew.-%, bezogen auf die Menge der Nutzschicht, enthält.

2. Bodenbelag nach Anspruch 1, wobei das flüssige/viskose Flammschutzmittel aus der Gruppe Phosphat, Phosphit, Phosphonat, organisch substituiertes Phosphonat, eine wässrige/ölige, roten Phosphor enthaltende Dispersion und Gemischen davon ausgewählt ist.

3. Bodenbelag nach einem oder mehreren der vorangehenden Ansprüche, wobei die Nutzschicht aus Linoleum zusätzlich ein Flammschutzmittel aus der Gruppe von verkohlungsfördernden und feuererstickenden Flammschutzmitteln, sperrschichtbildenden Flammschutzmitteln, Intumeszenzmitteln, festen anorganischen Flammschutzmitteln oder mindestens zwei dieser zusätzlichen Flammschutzmittel enthaltende Gemische umfaßt.

4. Bodenbelag nach Anspruch 3, wobei das feste anorganische Flammschutzmittel Aluminiumtrihydroxid ist.

5. Verfahren zur Herstellung eines Bodenbelags auf Linoleum-Basis, umfassend mindestens eine Nutzschicht aus Linoleum, welche mindestens eine Phosphor-enthaltende Verbindung, Lösung, Suspension oder Dispersion als flüssiges/viskoses Flammschutzmittel in einer Menge von bis zu 20 Gew.-%, bezogen auf die Menge der Nutzschicht, und ferner Wasserglas in einer Menge von bis zu 15 Gew.-%, bezogen auf die Menge der Nutzschicht, enthält, worin die mindestens eine flüssige/viskose Flammschutzmittel-enthaltende Linoleum-Mischmasse mittels Kalandern oder Walzwerken zu einem Bodenbelag verarbeitet wird.

## Claims

1. A floor covering based on linoleum, comprising at least one wear layer made of linoleum, which contains at least one phosphorus-containing compound, solution, suspension, or dispersion as a liquid/viscous flame retardant in a quantity of up to 20 weight-percent, in relation to the quantity of the wear layer, wherein the wear layer further contains water glass in a quantity of up to 15 weight-percent, in relation to the quantity of the wear layer.

2. The floor covering according to claim 1, wherein the liquid/viscous flame retardant is selected from the group of phosphate, phosphite, phosphonate, organically substituted phosphonate, an aqueous/oleaginous dispersion containing red phosphorus, and mixtures thereof.

3. The floor covering according to one or more of the preceding claims, wherein the wear layer made of linoleum additionally comprises a flame retardant from the group of carbonization-promoting and fire-smothering flame retardants, flame retardants which form a barrier layer, intumescence agents, solid inorganic flame retardants, or mixtures containing at least two of these additional flame retardants.

4. The floor covering according to claim 3, wherein the solid inorganic flame retardant is aluminum trihydroxide.

5. A method for manufacturing a floor covering based on linoleum, comprising at least one wear layer made of linoleum, which contains at least one phosphorus-containing compound, solution, suspension, or dispersion as a liquid/viscous flame retardant in a quantity of up to 20 weight-percent, in relation to the quantity of the wear layer, and further water glass in a quantity of up to 15 weight-percent, in relation to the quantity of the wear layer, in which the linoleum mixed mass containing at least one liquid/viscous flame retardant is processed into a floor covering using calenders or rolling mills.

## Revendications

1. Revêtement de sol à base de linoléum, comprenant au moins une couche d'usage en linoléum qui contient au moins un composé, une solution, une suspension ou une dispersion contenant du phosphore en tant qu'agent ignifuge liquide/visqueux en une quantité allant jusqu'à 20 % en poids par rapport à la quantité de couche d'usage, la couche d'usage contenant en outre du verre soluble.

2. Revêtement de sol selon la revendication 1, dans lequel l'agent ignifuge liquide/visqueux est choisi dans le groupe comprenant du phosphate, du phosphite, du phosphonate, du phosphonate substitué organiquement, une dispersion aqueuse/huileuse contenant du phosphore rouge et leurs mélanges.

3. Revêtement de sol selon une ou plusieurs des revendications précédentes, dans lequel la couche d'usage en linoléum comprend en outre un agent ignifuge choisi dans le groupe des agents ignifuges favorisant la carbonisation et anti-feu, des agents ignifuges formant une couche barrière, des agents intumescents, des agents ignifuges anorganiques solides ou des mélanges contenant au moins deux de ces agents ignifuges supplémentaires.

4. Revêtement de sol selon la revendication 3, dans lequel l'agent ignifuge anorganique solide est le trihydroxyde d'aluminium.

5. Procédé de fabrication d'un revêtement de sol à base de linoléum, comprenant au moins une couche d'usage en linoléum qui contient au moins un composé, une solution, une suspension ou une dispersion contenant du phosphore en tant qu'agent ignifuge liquide/visqueux en une quantité allant jusqu'à 20 % en poids par rapport à la quantité de couche d'usage, et contenant en outre du verre soluble, dans lequel la masse de mélange de linoléum contenant au moins un agent ignifuge liquide/visqueux est transformée en un revêtement de sol au moyen de calandres ou de laminoirs.
